Europäisches Patentamt

European Patent Office

Office européen des brevets

(11) Publication number: **0 190 858**

**A2**

(12) **EUROPEAN PATENT APPLICATION**

(21) Application number: 86300527.8

(22) Date of filing: 27.01.86

(51) Int. Cl.⁴: **G 01 K 13/02**
**G 01 K 7/18**

(30) Priority: 02.02.85 GB 8502691

(43) Date of publication of application:
13.08.86 Bulletin 86/33

(84) Designated Contracting States:
AT BE DE FR GB IT NL SE

(71) Applicant: SMITH METERS LIMITED
170, Rowan Road
Streatham Vale London, SW16 5JE(GB)

(72) Inventor: Connolly, Stephen
165, Cannon Hill Lane
Raynes Park London, SW20 9BZ(GB)

(72) Inventor: Swain, Rene Lawrence
46, Thurleston Avenue
Morden Surrey, SM4 4BW(GB)

(72) Inventor: Worrall, David Leslie
Kingsmead Green Lane
Chessington Surrey KT9 2DS(GB)

(74) Representative: Betteridge, Eileen Margaret
170, Rowan Road
Streatham Vale London, SW16 5JE(GB)

(54) Temperature-sensitive probes.

(57) A platinum resistance thermometer comprises a probe (18) connected by wires (19) to a cable (20). A cylindrical cantilever support member (17) extends well into the space the temperature of which is to be sensed and is formed of a low heat-conducting material. The wires (19) are wrapped around the outside of the member (17). Thus the wires and support member adjacent the probe achieve the ambient temperature. The temperature gradient from the inside of the space to the outside is experienced by the wires and support at a distance from the probe, so avoiding conduction of heat away from the probe and consequent inaccuracy in temperature sensing.

EP 0 190 858 A2

./...

Fig.1

0190858

## TEMPERATURE-SENSITIVE PROBES.

This invention relates to temperature-sensitive probes in which a probe is used to detect a temperature in a space into which it is inserted, the probe being required to attain the temperature of the space. It has been found that a probe may not attain the temperature of the space because heat may be conducted away along electrical leads and/or supports connected to the probes. This invention has for a purpose to provide a probe which is more able to match the required temperature.

The invention provides a temperature-sensitive probe mounted at the free end of an elongated cantilever support member and having electrical leads from the probe extending along the support member and exposed to the same ambient temperature as the probe. Preferably the support member is formed of a material having a low coefficient of thermal conductivity, comparable with that of a plastics material such as Teflon (polytetrafluoride) or a nylon. The leads may be arranged to be exposed to said ambient temperature by being wound around the outer surface of the support member. Alternatively, the leads may extend along a hollow interior of the support member, but exposed by the provision of a plurality of openings in the support member.

Since the support member is elongated, for instance it may be 40 - 60 mm long, the probe is held well into the space the temperature of which is to be sensed. Conduction of heat along the support member is reduced by the choice of material for the support member, while the length of the support member exposed to the temperature ensures that although there must be a temperature gradient as the support member extends out of the space, this does not extend to the probe itself and affect its temperature. Similarly, the electrical leads extend out of the space and thus will experience a temperature gradient when the temperature outside the space is different from that inside, but the increased exposure of the leads to the temperature in the space ensures that the temperature gradient occurs at a distance from the probe.

Thus by means of the invention the probe is enabled to take on more closely the temperature to which it is exposed. The probe may comprise one junction of a thermocouple intended to measure the temperature of either a gas or a liquid in the space or the sensing part of a resistance thermometer. The invention is equally useful for probes

PM473

used to detect high or low temperatures, the only difference being the different slope of the temperature gradient.

Two specific embodiments of the invention are shown in the accompanying drawings, in which:-

Figure 1  is a side section through a temperature probe located in a gas stream,          and

Figure 2  is a side view of a second form of temperature probe.

Both the temperature-sensitive probes shown are platinum resistance thermometers comprising ceramic sheaths in which are located platinum coils, the resistance of which changes with temperature.   The resistance is measured by ancillary apparatus (not shown) to which the coils are electrically connected.

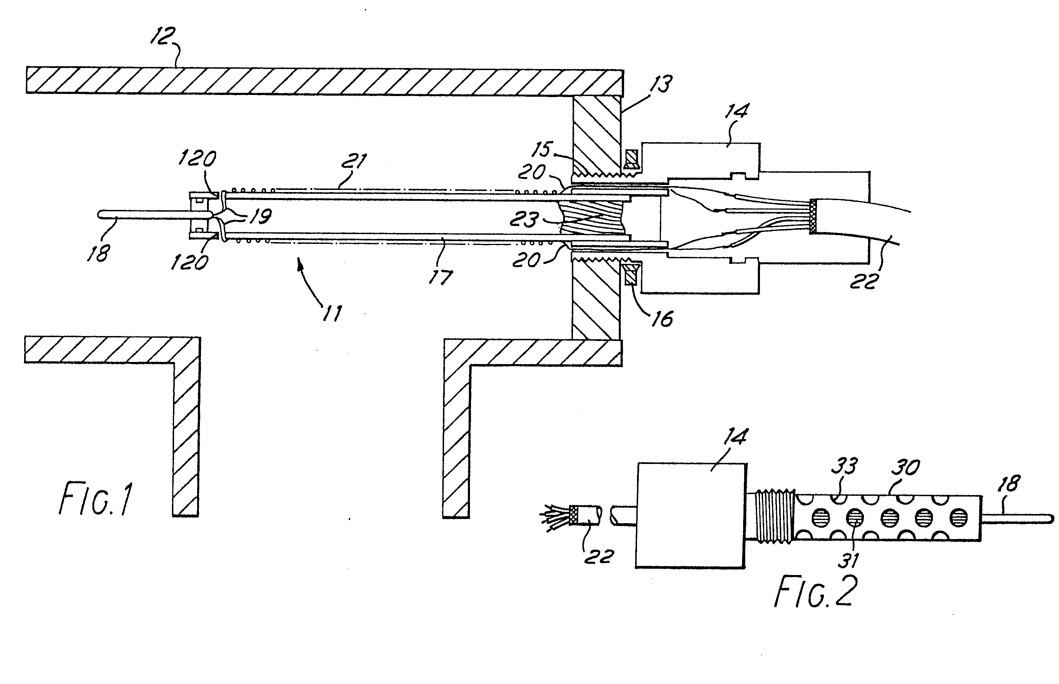

Referring first to Figure 1, a temperature-sensitive probe (11) is shown located in a gas pipe (12) so as to detect the temperature of gas flowing in the pipe.   The temperature probe is secured into an end face (13) of the pipe by a threaded boss (14) screwed into a threaded opening (15) in the face (13), the boss bearing on a seal (16) to seal the opening.   In the boss is mounted one end of a cylindrical cantilever support member (17) which extends into the pipe by a length of 50 mm. The support member is made of a low heat conducting material such as a resin bonded laminate, or nylon.   At its free end the support member carries the sensing resistance of the thermometer (18), extending 13 mm from the support.   The resistance is electrically connected to insulated wires (19) which extend into the support member and then out through openings (20) adjacent the free end thereof.   The wires are then wrapped closely about the outer surface of the support member as shown at (21), the wrapping of the wire following a spiral course so that the wires (20) extend along the length of the support member. The wires (20) then are led through the boss (14) to be connected to a cable (22).   The core of the support member is plugged adjacent face (13) by a silicon rubber plug (23).

The number of turns of the wire on the support member is high, preferably between 20 and 40 turns, so that the wire is exposed over a longer length to the temperature prevailing in the gas pipe.   In the

PM473

case that the gas temperature is higher than the ambient temperature there will be a rising temperature gradient along the wire from the cable to a point along the wire where its temperature has reached that of the hot gas.   Similarly, the support member itself will have a temperature gradient along its length.   By forming the support of a material whose coefficient of thermal conductivity is low compared with that of a metal it is ensured that the temperature of the support member reaches the ambient temperature of the gas at a point well short of the probe (18).   Thus it is ensured that the probe itself reaches the ambient temperature and is not cooled by thermal conduction through the wires or the support member.

It will be appreciated that the amount of heat conducted through the wires and support is a function of the temperature difference between the interior and exterior of the pipe.   Thus greater precautions need to be taken when large temperature differences are expected.

The embodiment of Figure 2 is suitable for use with lower temperature differences between the expected range of temperatures to be measured and the external ambient temperature.   The probe is again mounted on a threaded boss (14) similar to that of Figure 1, and has a cylindrical support member (30) extending 44 mm long.   Sensing resistance (18), similar to resistance (18) of Figure 1, is mounted at the free end of the support member and is connected by wires (31) to cable (22).   The wires (31) are not wound around the circumference of the support member as in Figure 1, but pass centrally along the axis of the support member, as shown.   The support member is formed with a large number, e.g. 20, openings (33), which thus allow gas movement into the interior of the support member and into contact with the wires (31).   Thus the wires are exposed to the gas and are heated to the temperature thereof.   The support member is made of a resin bonded linen material of thermal conductivity between 1.1 and 1.3 x $10^{-4}$ c.g.s. units.   Although with this embodiment the area of wire exposed to the gas temperature is less than in the first embodiment, it is still sufficient, combined with the open support member, for the wire to attain the gas temperature at a location spaced from the resistance (18).   While the support member is shown as a hollow cylinder pierced with holes, it could be formed in any other open mesh configuration, and could be formed of a plastics material capable of withstanding the temperatures envisaged.

PM473

CLAIMS:

1. A temperature-sensitive probe of the kind mounted at the free end of an elongated cantilever support member (17, 30) with electrical leads (19, 31) from the probe (18) extending along the support member (17, 30) characterized by the leads (19, 31) and support member (17, 30) being adapted to reach the sensed temperature adjacent the free end of the support member (17, 30) and to experience a temperature gradient confined to the other end of the support member (17, 30).

2. A temperature-sensitive probe as claimed in claim 1, further characterized by said support member (17, 30) being formed of a material having a low coefficient of thermal conductivity and by said electrical leads (19, 31) being exposed to the sensed temperature.

3. A temperature-sensitive probe as claimed in claim 2, further characterized by said support member (17, 30) being formed of polytetrafluoride or a nylon or a resin bonded laminate.

4. A temperature-sensitive probe as claimed in any of claims 1 to 3, further characterized by said support member (30) being hollow and said electrical leads (31) extending along its interior, and the support member (30) having a plurality of openings (33) whereby the leads (31) are exposed to the sensed temperature.

5. A temperature-senstive probe as claimed in any of claims 1 to 3, further characterized by said electrical leads (19) being wrapped around the outer surface of the support member (17).

6. A temperature-sensitive probe as claimed in claim 5, further characterized by the leads having between 20 and 40 turns around the support member.

FIG.1

FIG.2